# FASCICULE DE BREVET EUROPEEN

(11) **EP 2 909 019 B1**
(45) Date de publication et mention de la délivrance du brevet: **03.01.2018**
(21) Numéro de dépôt: 13771465.5
(22) Date de dépôt: 01.10.2013
(51) Int. Cl.: B29D 30/06

(54) **ELEMENT MOULANT D'UN MOULE POUR PNEUMATIQUE COMPORTANT UNE PLURALITE DE TROUS**
FORMELEMENT EINER FORM FÜR EINEN REIFEN MIT MEHREREN LÖCHERN
MOULDING ELEMENT OF A MOULD FOR A TYRE, COMPRISING A PLURALITY OF HOLES

(30) Priorité: 17.10.2012 FR 1259899
(43) Date de publication de la demande: 26.08.2015
(73) Titulaire: Compagnie Générale des Etablissements Michelin, 63000 Clermont-Ferrand (FR)
(72) Inventeur: GUEUGNEAU, Anthony, F-63040 Clermont-Ferrand Cedex 9 (FR); BLANCHET, Etienne, F-63040 Clermont-Ferrand Cedex 9 (FR)
(74) Mandataire: Demaure, Pierre-Yves
(86) Numéro de dépôt international: PCT/EP2013/070391
(87) Numéro de publication internationale: WO 2014/060207

(56) Documents cités:
- WO-A1-2010/076502
- DE-A1- 4 243 962
- DE-A1-102004 028 462
- DE-A1-102004 052 766
- GB-A- 1 358 329
- GB-A- 1 358 329
- GB-A- 2 050 931
- JP-A- 2008 265 073
- US-A1- 2006 188 593

## Description

### DOMAINE DE L'INVENTION

La présente invention concerne un élément moulant obtenu par frittage et comportant des moyens d'éventation particuliers. L'élément moulant est destiné à être agencé dans un moule pour pneumatique, notamment un moule de type à secteurs.

### ETAT DE LA TECHNIQUE

Un moule à secteurs comprend plusieurs parties séparées qui, par rapprochement relatif, délimitent un espace de moulage globalement toroïdal. En particulier, un moule à secteurs comporte deux coquilles latérales pour le moulage des flancs du pneumatique et plusieurs secteurs périphériques situés entre les coquilles pour le moulage de la bande de roulement du pneumatique. Le rapprochement de toutes ces parties est assuré par une cinématique adaptée grâce à un mécanisme déterminé.

Pour mouler la bande de roulement, les secteurs de moule comprennent des éléments moulants. Par élément moulant, on entend un élément du moule qui comporte une surface de moulage permettant de mouler une partie de la bande de roulement d'un pneumatique.

Il est possible de réaliser un élément moulant par un procédé de fusion sélective plus communément nommé frittage. Ce procédé utilise un faisceau énergétique pour fusionner une poudre métallique. Par « faisceau énergétique », on entend un rayonnement électromagnétique (par exemple un faisceau laser) ou un faisceau de particules (par exemple un faisceau d'électrons).

Un procédé de frittage utilisant un laser, ci-après dénommé procédé de frittage laser, est connu du document EP1641580. Dans ce document, une première couche de poudre métallique est étalée sur un plateau. Tout ou partie des grains de cette première couche de poudre est ensuite agglomérée par le faisceau d'un laser en fonction de la forme de l'objet que l'on souhaite obtenir. Une fois cette étape effectuée une deuxième couche de poudre est étalée sur la première couche de poudre pour être à son tour fusionnée sélectivement par laser. En répétant ces opérations d'étalement de couche et de fusion par laser, on construit couche par couche un objet fritté.

Le document WO2010/076502 divulgue un élément moulant particulier obtenu par cette technique de frittage laser. Cet élément moulant, appelé peau, présente une faible épaisseur et est destiné à être placé dans un moule. Afin d'éviter d'emprisonner de l'air entre le moule et une ébauche crue d'un pneumatique lors d'une opération de vulcanisation de ce pneumatique, il est nécessaire de prévoir des moyens d'éventation dans l'élément moulant.

Les documents DE102004028462 et DE102004052766 divulguent des exemples de tels moyens d'éventation. Plus particulièrement, ces documents divulguent une pièce de moule comportant un élément moulant obtenu par frittage laser et un élément d'interface avec le reste du moule. Cet élément d'interface est non fritté et est solidarisé avec l'élément moulant. L'élément moulant comprend dans tout son volume une pluralité de pores formant des cavités de faibles dimensions. Ces cavités sont aptes à diriger l'air vers des perçages formés dans l'élément d'interface et débouchant à l'arrière de cet élément d'interface. Or, la présence d'un grand nombre de pores dans l'élément moulant diminue la densité de matière dans cet élément et le rend plus fragile aux sollicitations mécaniques. Ainsi, les solutions d'éventation, divulguées dans les documents DE102004028462 et DE102004052766, appliquées à l'élément moulant du document WO2010/076502 rendraient cet élément trop fragile du fait de sa faible épaisseur. En outre, dans les documents DE102004028462 et DE102004052766, il est nécessaire de prévoir une opération supplémentaire de perçage de l'élément d'interface.

Le document DE19628166 divulgue une autre solution d'éventation dans laquelle on prévoit de rapporter un insert dans un trou préalablement réalisé dans la profondeur de l'élément moulant. L'insert comprend un corps cylindrique creux et une tête en forme de plaque venue de matière avec ce corps. La tête comprend une pluralité de trous débouchant dans la partie creuse du corps cylindrique. La profondeur des trous est limitée à l'épaisseur de la plaque de sorte à diminuer les risques d'encrassement de ces trous et à favoriser l'évacuation de l'air via le corps creux de l'insert. L'utilisation d'un insert rapporté dans l'élément moulant rend, cependant, cette solution complexe et coûteuse.

Il existe donc un besoin de proposer une solution d'éventation simple et économique pour un élément moulant d'un moule pour pneumatique.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « découpure » dans une bande de roulement, on entend l'espace délimité par des parois de matière se faisant face et distante l'une de l'autre d'une distance non nulle.

Par « moule », on entend un ensemble de pièces séparées qui, par rapprochement relatif, permettent de délimiter un espace de moulage toroïdal.

Par « diamètre équivalent » d'un trou, on entend le diamètre du cercle inscrit dans ce trou.

Par « plaque » d'un élément moulant, on entend une portion de cet élément présentant une faible épaisseur par rapport à l'épaisseur de cet élément.

Par « plaque au même niveau que la première surface du corps », on entend que la surface supérieure de cette plaque affleure à cette première surface du corps.

Par «motif» sur le pneumatique, on entend un ornement sur ce pneumatique pouvant améliorer son esthétique globale et/ou donnant des informations techniques ou légales sur ce pneumatique.

### RESUME DE L'INVENTION

Comme défini dans la revendication 1, l'invention concerne un élément moulant pour un moule pour pneumatique fabriqué à partir d'une poudre métallique fusionnée couche par couche. L'élément moulant comporte un corps, ce corps comprenant une première surface destinée à mouler tout ou partie d'une surface de roulement du pneumatique et une seconde surface opposée à la première surface et destinée à être en contact avec une autre partie du moule. L'épaisseur du corps de l'élément moulant est comprise entre 1 et 6 millimètres et l'élément moulant comprend au moins une cavité débouchant sur la seconde surface de ce corps. L'élément moulant comprend une plaque disposée en travers de la cavité et venue de matière avec le corps de l'élément moulant, cette plaque étant au même niveau que la première surface du corps. La plaque comprend au moins un trou permettant un passage d'air entre la première surface de l'élément moulant et sa seconde surface.

La plaque en travers de la cavité permet de contrôler l'évacuation de l'air par l'intermédiaire des trous. Cette plaque est ici fabriquée en même temps que le corps de l'élément moulant lors de la fusion de la poudre métallique. L'invention permet ainsi de proposer une solution d'éventation simple et économique.

La plaque comprend une pluralité de trous formant un maillage sur cette plaque, ces trous ayant un diamètre équivalent compris entre 0,05 mm et 1 mm.

Les dimensions des trous dans la plaque ainsi que leur agencement permettent de limiter la pénétration de la gomme dans la plaque lorsque le moule est fermé. On évite ainsi l'apparition de protubérances de gomme vulcanisée sur la surface de roulement du pneumatique et on améliore en conséquence l'esthétique globale de ce pneumatique.

Des formes préférentielles de l'invention sont définies dans les revendications dépendantes. Dans un mode de réalisation préférentiel, le maillage de trous forme un marquage sur l'élément moulant. Ce marquage est destiné à mouler un motif sur le pneumatique.

En organisant le maillage de trous de sorte à ce qu'il soit apte à créer un motif prédéfini sur le pneumatique, on améliore globalement l'esthétique du pneumatique.

Dans une variante de réalisation, l'élément moulant comporte une pluralité de protubérances faisant saillie à partir de la première surface du corps de l'élément moulant et destinées à mouler des découpures dans la bande de roulement du pneumatique, au moins deux protubérances de la pluralité de protubérances se croisant sur cette première surface, et dans lequel le ou les trou(s) de la plaque débouche(nt) au croisement des deux protubérances.

L'endroit où se croisent les protubérances sur la première surface du corps est particulièrement critique puisqu'une grande quantité d'air peut s'accumuler dans cet endroit lors de la fermeture du moule sur l'ébauche crue. En faisant déboucher les trous de la plaque au croisement de deux protubérances, on facilite l'évacuation de l'air hors du moule et on limite l'apparition de défauts de surface sur la bande de roulement une fois celle-ci vulcanisée.

Dans une variante de réalisation, l'élément moulant comporte une surface latérale reliant la première surface du corps de l'élément moulant à sa seconde surface, l'élément moulant comprenant une zone poreuse reliant la cavité à la surface latérale, cette zone poreuse formant tout ou partie de la seconde surface du corps de l'élément.

La seconde surface de l'élément moulant va venir en contact avec une autre partie du moule. Le contact entre l'élément moulant et cette autre partie du moule n'est généralement pas entièrement étanche. En créant une zone poreuse dans l'élément moulant à l'interface avec l'autre partie du moule, on favorise l'évacuation de l'air hors du moule sans avoir à percer l'autre partie du moule. On facile ainsi la fabrication de ce moule.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** est une vue en perspective d'un élément moulant selon l'invention ;
- la **figure 2** est un agrandissement d'une vue en coupe de l'élément moulant de la **figure 1** au niveau de moyens d'éventation ;
- la **figure 3** représente schématiquement une vue en coupe, dans un plan perpendiculaire au plan de la **figure 2****,** de l'élément moulant de la **figure 1** selon un second mode de réalisation ;
- la **figure 4** représente schématiquement une vue en coupe d'un élément moulant conforme à l'invention selon un troisième mode de réalisation.

Dans la description qui va suivre, des éléments sensiblement identiques ou similaires seront désignés par des références identiques.

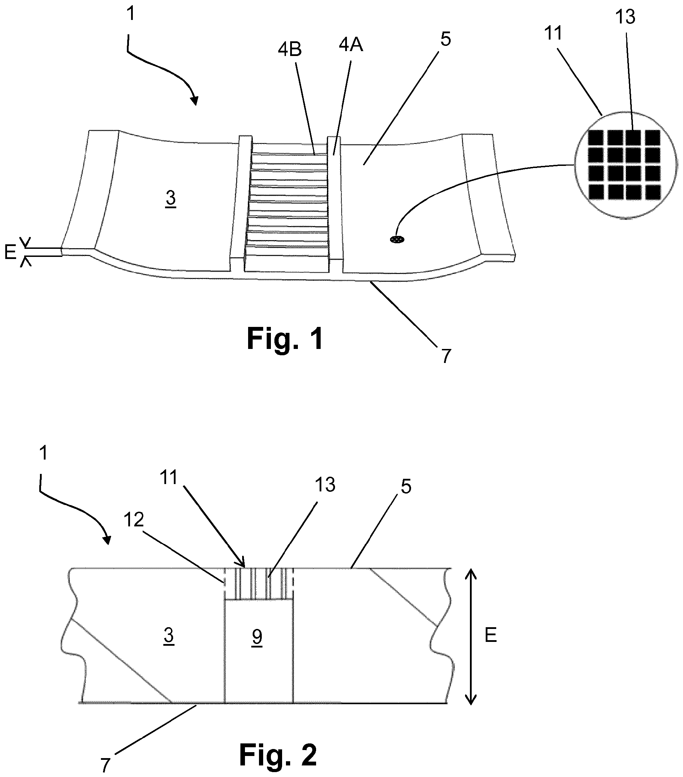

La **figure 1** présente une vue en perspective d'un élément moulant 1 fabriqué à partir d'une poudre métallique fusionnée couche par couche. Cet élément moulant comprend un corps 3 et des protubérances 4A, 4B faisant saillies à partir de ce corps 3. Plus particulièrement, le corps 3 comprend une première surface 5 et une seconde surface 7 opposée à la première surface 5. La première surface 5 est destinée à mouler tout ou partie d'une surface de roulement d'un pneumatique et la seconde surface 7 est destinée à entrer en contact avec une autre partie d'un moule dans lequel est rapporté l'élément moulant 1. La première surface 5 et la seconde surface 7 définissent l'épaisseur E du corps 3. Cette épaisseur E est comprise entre 1 et 6 millimètres. Préférentiellement, cette épaisseur est comprise entre 2 et 2,5 millimètres. Cette faible épaisseur confère à l'élément moulant une légèreté et une souplesse facilitant son positionnement et son maintien lorsque celui-ci est rapporté dans une autre partie de moule.

L'élément moulant 3 comprend, en outre, une plaque 11. Cette plaque 11 comprend une pluralité de trous 13. Ces trous ont ici une section carrée et le diamètre du cercle inscrit dans cette section est compris entre 0,05 mm et 1 mm. En variante, la section des trous peut être circulaire, triangulaire ou autres. On notera que les trous 13 forment ici un maillage sur la plaque 11 et ce maillage est apte à mouler un motif sur le pneumatique. Ce motif peut être par exemple un logo, un mot ou autres.

La **figure 2** présente de manière plus détaillée la plaque 11. Cette plaque 11 est disposée en travers d'une cavité 9. Par « en travers » d'une cavité, on comprend que la plaque 11 s'étend dans une direction globalement perpendiculaire à la direction principale d'extension de cette cavité. De plus, la plaque 11 est venue de matière avec le corps 3 de l'élément moulant. Par « venu de matière », on entend que le corps 3 et la plaque 11 sont formés dans un même matériau au cours d'une même opération de fabrication. Ainsi, la plaque 11 constitue un prolongement du corps 3 au-dessus de la cavité 9. Cependant, afin de faciliter la compréhension de l'invention, une délimitation de la cavité 9 par rapport au corps 3 a été représentée sous forme de pointillés 12.

On notera que la cavité 9 débouche sur la seconde surface 7 du corps 3 de sorte que les trous 13 dans la plaque 11 permettent un passage d'air entre la première surface 5 de l'élément moulant et sa seconde surface 7.

On notera également que la plaque 11 est au même niveau que la première surface 5 de sorte que cette plaque 11 affleure cette première surface 5.

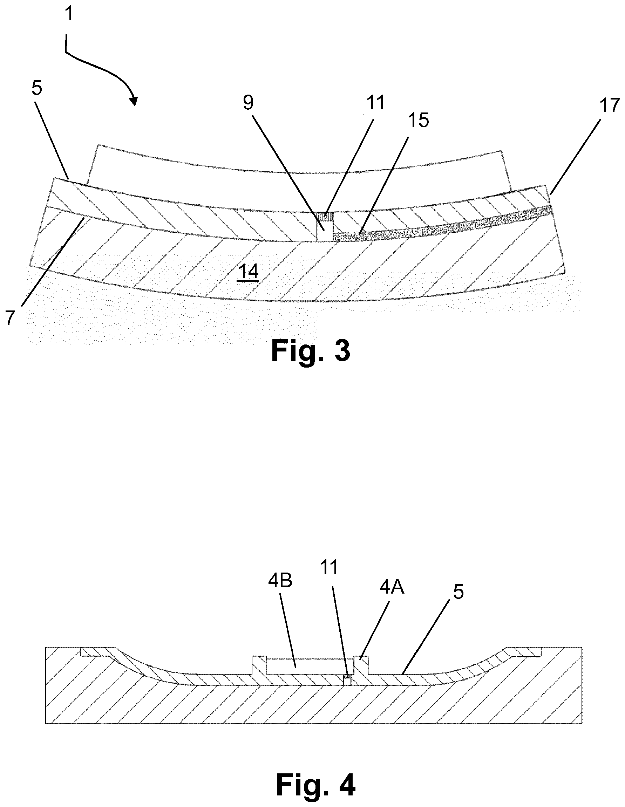

La **figure 3** est une vue en coupe de l'élément moulant 1, selon un second mode de réalisation, dans un plan perpendiculaire au plan de la **figure 2****.** L'élément moulant 1 est ici représenté comme un élément rapporté sur une autre partie 14 du moule. Plus particulièrement, dans ce mode de réalisation, l'élément moulant 1 comprend une zone poreuse 15. Par zone poreuse, on entend une zone comportant une pluralité de pores permettant le passage de l'air. Ces pores génèrent un volume de creux dans la zone poreuse 15 qui est supérieur à 20%. La zone poreuse 15 forme ici une partie de la seconde surface 7 de l'élément moulant 1. Plus particulièrement, cette zone poreuse 15 relie la cavité 9 à une surface latérale 17 de cet élément moulant 1. La surface latérale 17 est la surface de l'élément 1 qui relie la première surface 5 à la seconde surface 7. De cette manière on réalise une évacuation de l'air hors du moule, par l'intermédiaire des trous de la plaque 11, de la cavité 9 et de la zone poreuse 15 et ceci sans avoir à percer l'autre partie 14 du moule.

La **figure 4** représente un troisième mode de réalisation dans lequel la plaque 11 de l'élément moulant 1 débouche au croisement de deux protubérances 4A, 4B. De cette manière, on améliore l'évacuation de l'air à proximité des protubérances lorsque le moule se referme sur l'ébauche crue.

L'invention n'est pas limitée aux exemples décrits et représentés et diverses modifications peuvent y être apportées sans sortir de son cadre.

Sur les **figures 1** à **4****,** on a représenté une plaque 11 comprenant une pluralité de trous. En variante, cette plaque 11 peut comprendre un seul trou. Ce trou peut par exemple présenter une section circulaire avec un diamètre de l'ordre de 0,8 mm.

## Revendications

1. Elément moulant pour un moule pour pneumatique fabriqué à partir d'une poudre métallique fusionnée couche par couche, l'élément moulant (1) comportant un corps (3), ce corps comprenant une première surface (5) destinée à mouler tout ou partie d'une surface de roulement du pneumatique et une seconde surface (7) opposée à la première surface et destinée à être en contact avec une autre partie du moule, l'épaisseur (E) du corps de l'élément moulant étant comprise entre 1 et 6 millimètres, l'élément moulant comprenant au moins une cavité (9) débouchant sur la seconde surface de ce corps, **caractérisé en ce que** l'élément moulant comprend une plaque (11) disposée en travers de la cavité et venue de matière avec le corps de l'élément moulant, cette plaque étant au même niveau que la première surface (5) du corps **et en ce que** la plaque (11) comprend au moins un trou (13) permettant un passage d'air entre la première surface (5) de l'élément moulant et sa seconde surface (7) **et en ce que** la plaque (11) comprend une pluralité de trous (13) formant un maillage sur cette plaque, ces trous ayant un diamètre équivalent compris entre 0,05 mm et 1 mm.

2. Elément moulant selon la revendication 1, dans lequel le maillage de trous (13) forme un marquage sur l'élément moulant, ce marquage étant apte à mouler un motif sur le pneumatique.

3. Elément moulant selon l'une quelconque des revendications 1 à 2, dans lequel l'élément moulant comporte une surface latérale (17) reliant la première surface du corps de l'élément moulant à sa seconde surface, l'élément moulant comprenant une zone poreuse (15) reliant la cavité (9) à la surface latérale, cette zone poreuse formant tout ou partie de la seconde surface du corps de l'élément.

4. Elément moulant selon l'une quelconque des revendications 1 à 3, dans lequel cet élément moulant comporte une pluralité de protubérances (4A, 4B) faisant saillie à partir de la première surface (5) du corps de cet élément et destinées à mouler des découpures dans la bande de roulement du pneumatique, au moins deux protubérances (4A, 4B) de la pluralité de protubérances se croisant sur cette première surface, et dans lequel le ou les trou(s) de la plaque (11) débouche(nt) au croisement des deux protubérances.

## Patentansprüche

1. Formelement für eine Form für einen Reifen, das aus einem Schicht für Schicht zusammengeschmolzenen Metallpulver hergestellt ist, wobei das Formelement (1) einen Körper (3) aufweist, wobei dieser Körper eine erste Fläche (5), die dazu bestimmt ist, eine gesamte Lauffläche des Reifens oder einen Teil davon zu formen, und eine zweite Fläche (7), die der ersten Fläche gegenüberliegt und dazu bestimmt ist, sich mit einem anderen Teil der Form in Kontakt zu befinden, umfasst, wobei die Dicke (E) des Körpers des Formelements zwischen 1 und 6 Millimetern liegt, wobei das Formelement wenigstens einen Hohlraum (9) umfasst, der auf der zweiten Fläche dieses Körpers mündet, **dadurch gekennzeichnet, dass** das Formelement eine Platte (11) umfasst, die quer zu dem Hohlraum angeordnet und stoffschlüssig mit dem Körper des Formelements verbunden ist, wobei sich diese Platte auf derselben Höhe wie die erste Fläche (5) des Körpers befindet, und dadurch, dass die Platte (11) wenigstens ein Loch (13) umfasst, das ein Hindurchströmen von Luft zwischen der ersten Fläche (5) des Formelements und dessen zweiter Fläche (7) ermöglicht, und dadurch, dass die Platte (11) mehrere Löcher (13) umfasst, die ein Raster auf dieser Platte bilden, wobei diese Löcher einen gleichen Durchmesser aufweisen, der zwischen 0,05 mm und 1 mm liegt.

2. Formelement nach Anspruch 1, wobei das Raster von Löchern (13) eine Markierung auf dem Formelement bildet, wobei diese Markierung geeignet ist, ein Motiv auf dem Reifen zu formen.

3. Formelement nach einem der Ansprüche 1 bis 2, wobei das Formelement eine seitliche Fläche (17) aufweist, welche die erste Fläche des Körpers des Formelements mit dessen zweiter Fläche verbindet, wobei das Formelement einen porösen Bereich (15) umfasst, der den Hohlraum (9) mit der seitlichen Fläche verbindet, wobei dieser poröse Bereich die gesamte zweite Fläche des Körpers des Elements oder einen Teil davon bildet.

4. Formelement nach einem der Ansprüche 1 bis 3, wobei dieses Formelement mehrere Vorsprünge (4A, 4B) aufweist, die von der ersten Fläche (5) des Körpers dieses Elements aus vorstehen und dazu bestimmt sind, Ausschnitte in dem Laufstreifen des Reifens zu formen, wobei sich wenigstens zwei Vorsprünge (4A, 4B) der mehreren Vorsprünge auf dieser ersten Fläche kreuzen, und wobei das Loch oder die Löcher der Platte (11) an der Kreuzung der zwei Vorsprünge mündet (münden).

## Claims

1. Moulding element for a tyre mould manufactured from a metallic powder fused together layer by layer, the moulding element (1) comprising a body (3), this body comprising a first surface (5) intended to mould all or part of a tread surface of the tyre and a second surface (7) opposite to the first surface and intended to be in contact with another part of the mould, the thickness (E) of the body of the moulding element being comprised between 1 and 6 millimetres, the moulding element comprising at least one cavity (9) opening onto the second surface of this body, **characterized in that** the moulding element comprises a plate (11) positioned across the cavity and formed as one with the body of the moulding element, this plate being at the same level as the first surface (5) of the body, **and in that** the plate (11) comprises at least one hole (13) allowing air to pass between the first surface (5) of the moulding element and the second surface (7) thereof, **and in that** the plate (11) comprises a plurality of holes (13) forming a grid structure on this plate, these holes having an equivalent diameter comprised between 0.05 mm and 1 mm.

2. Moulding element according to Claim 1, in which the grid structure of holes (13) forms a marking on the moulding element, this marking being able to mould a pattern on the tyre.

3. Moulding element according to either one of Claims 1 and 2, in which the moulding element comprises a lateral surface (17) connecting the first surface of the body of the moulding element to the second surface thereof, the moulding element comprising a porous area (15) connecting the cavity (9) to the lateral surface, this porous area forming all or part of the second surface of the body of the element.

4. Moulding element according to any one of Claims 1 to 3, in which this moulding element comprises a plurality of protrusions (4A, 4B) projecting from the first surface (5) of the body of this element and intended to mould cuts in the tread of the tyre, at least two protrusions (4A, 4B) of the plurality of protrusions intersecting on this first surface, and in which the hole or holes in the plate (11) opens or open at the intersection of the two protrusions.
